# FASCICULE DE BREVET EUROPEEN

(11) **EP 2 539 209 B1**
(45) Date de publication et mention de la délivrance du brevet: **15.06.2016**
(21) Numéro de dépôt: 11706869.2
(22) Date de dépôt: 24.01.2011
(51) Int. Cl.: B62D 25/08

(54) **STRUCTURE D'UN VEHICULE COMPRENANT UN PASSAGE DE ROUE A RIGIDITE AMELIOREE.**
FAHRZEUGSTRUKTUR MIT EINEM RADGEHÄUSE VON ERHÖHTER STEIFIGKEIT
VEHICLE STRUCTURE INCLUDING A WHEEL HOUSING HAVING IMPROVED RIGIDITY

(30) Priorité: 25.02.2010 FR 1051363
(43) Date de publication de la demande: 02.01.2013
(73) Titulaire: Peugeot Citroën Automobiles SA, 78140 Vélizy Villacoublay (FR)
(72) Inventeur: BOURIOT, Frank, F-25550 Allondans (FR)
(74) Mandataire: Fernandez, Francis Lionel
(86) Numéro de dépôt international: PCT/FR2011/050136
(87) Numéro de publication internationale: WO 2011/104449

(56) Documents cités:
- JP-U- 2 072 175
- JP-U- 4 018 075
- JP-U- 62 059 579
- US-A1- 2002 008 407
- US-A1- 2006 006 699

## Description

La présente invention concerne une structure d'un véhicule comprenant un passage de roue à rigidité améliorée.

L'invention concerne plus particulièrement une partie avant d'une structure de véhicule, notamment d'une automobile, comprenant un brancard, un support de suspension et un passage de roue disposé verticalement entre le brancard et le support de suspension.

Il est connu une partie avant de structure d'un véhicule automobile dont la tenue à la déformation en cas de choc frontal est en partie garantie par la rigidité des pièces la constituant.

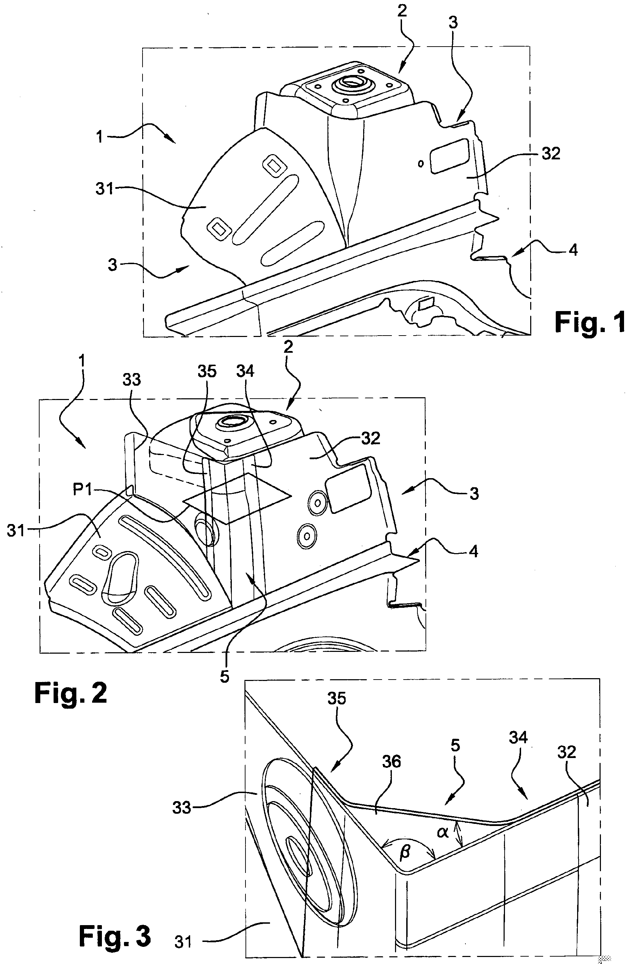

Comme cela est représenté sur la figure 1 annexée, il est par exemple connu une partie 1 avant de la structure comprenant un support 2 de suspension, un passage 3 de roue et un brancard 4 agencés les uns aux autres de telle sorte que le passage 3 de roue relie verticalement le support 2 de suspension au brancard 4.

Afin de résister aux efforts induits par un choc entre l'avant du véhicule et un obstacle extérieur à ce dernier, il est connu de fabriquer le brancard à partir d'un acier à haute limite à la déformation. En outre, selon une section transversale, le brancard est une poutre de section fermée et est conformé pour résister à un écrasement lors d'un choc frontal.

Le support de suspension est quant à lui réalisé afin de résister à la déformation induite par les éléments de liaison au sol qui remontent des efforts de roulage à la structure de caisse.

La Demanderesse a observé, lors d'un choc frontal d'un véhicule comportant une telle partie avant de structure, une levée du brancard qui se traduit par une déformation par écrasement du passage de roue liant le brancard au support de suspension.

Le document US 2006/0006699 divulgue une poutre de rigidification qui relie une partie supérieure de la structure avant du véhicule au brancard, en cheminant le long du passage de roue pour former une voie d'effort. Ce document divulgue le préambule de la revendication 1.

Un but de la présente invention est de pallier tout ou partie des inconvénients de l'art antérieur relevés ci-dessus.

A cette fin, la partie avant de la structure d'un véhicule selon l'invention, par ailleurs conforme à la définition générique qu'en donne le préambule ci-dessus, est essentiellement caractérisé en ce que ledit passage de roue définit une poutre de rigidification liant le support de suspension au brancard.

une telle partie de structure permet avantageusement d'augmenter de manière très significative la tenue du passage de roue à l'écrasement, évitant par la même un rapprochement du brancard vers le support de suspension et favorisant un transfert d'énergie du brancard vers le support de suspension.

Ledit passage de roue comprend au moins deux parois superposées l'une sur l'autre et délimitant les parois d'un corps creux formant ladite poutre de rigidification, une telle conception du passage de roue ayant permettant de manière simple et peu coûteuse d'augmenter sa rigidité.

Ladite poutre est de section triangulaire, ce qui lui confère un excellent rapport entre encombrement et rigidité, permettant d'autant son implantation sur tout type de véhicule.

De préférence, chacune des parois définissant ladite poutre de rigidification est fixée au support de suspension et au brancard de sorte que l'effort d'un choc frontal transitant par le brancard est transmis au support de suspension, ce qui procure au passage de roue une inertie élevée favorisant une transmission rapide de l'énergie du choc subit par le brancard vers le support de suspension, qui est une pièce de rigidité élevée.

L'une des parois du passage de roue est une paroi transversale comprenant un bord latéral plié à angle aigu et que l'autre des pièces du passage de roue définit une paroi interne comprend un bord avant plié comprenant une paroi inclinée formant une équerre de liaison et s'étendant à l'intérieur de l'angle aigu de la paroi transversale, ce qui permet de disposer la poutre de rigidification au plus près du brancard sur lequel les éléments constitutifs du passage de roue sont directement fixé.

De préférence encore, le corps creux formant ladite poutre de rigidification s'étend sur toute la hauteur du passage de roue ce qui optimise le rôle du passage de roue dans le transfert de l'énergie du choc.

La partie avant comprend des bandes de recouvrement délimitées par la superposition des parois transversale et interne l'une sur l'autre, lesdits bandes de recouvrement de préférence s'étendant le long de la poutre, conférant à cette dernière une section fermée continue sur toute sa hauteur qui est gage d'une bonne résistance à la déformation.

Les parois constituant ledit passage de roue sont fixées les unes aux autres par soudure, ce qui représente une manière simple de réalisation du passage de roue.

De préférence, le corps creux de la poutre est rempli d'un moyen d'augmentation de la rigidité des parois la délimitant, ce qui améliore encore plus la résistance de la poutre.

L'invention concerne aussi un véhicule, telle qu'une automobile, comportant une structure dont la partie avant comprend tout ou partie des caractéristiques susmentionnées.

D'autres avantages et particularités de l'invention ressortent de la description de modes de réalisation faite ci-après en référence aux dessins annexés dans lesquels :
- la figure 1 représente de manière schématique, selon une vue en perspective partielle, une partie avant droite d'une structure d'un véhicule de l'état de la technique,
- la figure 2 représente de manière schématique, selon une vue en perspective partielle identique à celle de la figure 1, une partie avant droite d'une structure d'un véhicule comportant une poutre de rigidification, selon l'invention,
- la figure 3 est une représentation en perspective selon une section de plan P1 de la figure 2, des pièces constitutives de la poutre de rigidification, selon l'invention.

En se reportant à la figure 2, la partie 1 avant droite de la structure définissant la caisse d'un véhicule comprend un passage 3 de roue dont la partie supérieure est reliée à un support 2 destiné à la fixation d'un élément de suspension liant la roue à la caisse. Le passage 3 de roue est délimité par une partie inférieure qui est assemblée au brancard. L'assemblage du passage 3 de roue avec le support de suspension et avec le brancard est réalisé au moyen d'un procédé de soudage, par exemple par des points de soudures électriques. Pour ce faire, les parties supérieure et inférieure du passage 3 de roue se superposent audit support 2 de suspension et audit brancard 4.

Les contraintes géométriques de conception ne permettent pas la réalisation par emboutissage du passage 3 de roue en une seule pièce.

Le passage 3 de roue est pour cette raison réalisé à partir de plusieurs pièces de tôlerie embouties et comprend de préférence une pièce 31 avant, une paroi 33 transversale et une paroi 32 interne reliées entre elles par soudage.

La pièce 31 avant présente un double galbe, l'un longitudinal, l'autre transversal afin de se conformer à l'aile avant délimitant ledit passage de roue du véhicule et au brancard 4. La pièce 31 comprend des nervures de rigidification orientées de manière sensiblement parallèle à la paroi 33 transversale. Chaque nervure de rigidification est obtenue par emboutissage et permet d'augmenter la tenue de la pièce 31 en cas de choc latéral.

La paroi 33 transversale est liée au bord d'extrémité arrière de la pièce 31 avant et comme son nom l'indique, s'étend sensiblement transversalement à la partie avant de structure. Elle est identique à la pièce 31 en ce qui concerne sa liaison à l'aile avant et au brancard 4. A cet effet, tout comme la pièce 31, la pièce 33 transversal comprend des rebords latéraux réalisés par pliage.

La paroi 33 est prolongée vers l'arrière par la paroi 32 interne qui s'étendant sensiblement de manière parallèle au brancard 4. Par voie de conséquence, le bord intérieur de la pièce 33 est recouvert par superposition de la paroi 32. Les pièces 32 et 33 définissent ensemble une bande 34 de liaison au niveau de leur recouvrement mutuel sur laquelle sont pratiqués des points de soudures assurant leur fixation.

Les parois 33, 32 transversale et interne entourent le support 2 de suspension, respectivement au niveau de ses bords avant et intérieur. Les parois 32 et 33 s'étendent principalement dans des plans verticaux et perpendiculaires entre eux. Le support 2 de suspension est disposé en appui sur une partie supérieure des parois 32 et 33. Le support 2 de suspension est ainsi surélevé par rapport à la pièce 31 avant du passage de roue.

La pièce 32 interne comprend un bord avant incliné qui permet sa mise en appui contre la paroi 33, de sorte que ces deux parois définissent une seconde bande de liaison destinée à la fixation par soudure des parois 32 et 33. Ladite seconde bande 35 de liaison délimitée par le recouvrement des parois 32 et 33 est sensiblement parallèle à l'autre bande 34 de liaison.

C'est ainsi que le bord avant de la paroi 32 est plié d'un angle α inférieur à l'angle β de pliage du bord interne de la paroi 33. A titre d'exemple illustré, le bord interne de la paroi 33 transversale présente un angle β aigu d'environ 90° tandis que le bord avant de la paroi 32 interne délimite une paroi 36 inclinée d'angle α d'environ 45°, comme cela est représenté sur la figure 3.

La paroi 36 inclinée s'étend à l'intérieur de l'angle aigu, de manière à venir en appui sur la paroi 33.

Par un agencement des parois 32 et 33 particulier, il est ainsi défini une poutre 5 de rigidification qui s'étend de préférence le long de toute la hauteur des parois 32 et 33, de telle sorte que ses extrémités supérieure et inférieur sont directement et respectivement reliées au support 2 de suspension et au brancard 4.

Comme cela est illustré sur la figure 3, qui est une vue en section partielle selon le plan de coupe P1 de la figure 2, la poutre 5 de rigidification est creuse et de section sensiblement triangulaire.

Elle s'étend avantageusement le long du bord intérieur du passage 3 de roue, ce qui, au vu de son faible encombrement, lui confère une intégration facilité dans la structure de véhicule.

Bien entendu, la détermination des angles α et β pendant la phase de conception de la structure avant permet de déterminer la dimension de la section de la poutre de rigidification, ce qui par conséquent permet une adaptabilité à toute échelle de tenue à la déformation du passage 3 de roue en cas de choc.

Un tel passage 3 de roue est remarquable en ce qu'il permet d'augmenter significativement sa rigidité lors d'un choc sans avoir recours à un acier d'épaisseur plus importante, de nuance ou de coût de fabrication plus élevé.

En outre, selon un mode de réalisation perfectionné du passage 3 de roue, la poutre 5 est remplie d'un matériau réactif qui est destiné à augmenter la résistance des parois 32 et 33 qui la délimitent. A titre d'exemple non limitatif, un tel matériau est à base d'époxy et est notamment connu sous la marque TEROCORE ® par exemple, qui a la particularité de passer d'un premier à un second état solide gonflé par sa mise en température, comme cela est notamment le cas après l'étape de mise en cataphorèse de la structure du véhicule.

## Revendications

1. Partie (1) avant d'une structure de véhicule, notamment d'une automobile, comprenant un brancard (4), un support (2) de suspension et un passage (3) de roue disposé verticalement entre le brancard et le support de suspension, le passage (3) de roue comprenant au moins deux parois (32, 33) superposées l'une sur l'autre et délimitant les parois d'un corps creux formant une poutre (5) de rigidification de section triangulaire, ladite poutre (5) de rigidification liant le support (2) de suspension au brancard (4), l'une des parois dudit passage (3) de roue est une paroi (33) transversale comprenant un bord latéral plié à angle aigu , **caractérisé en ce que** l'autre des pièces du passage de roue définit une paroi (32) interne comprend un bord avant plié comprenant une paroi (36) inclinée formant une équerre de liaison et s'étendant à l'intérieur de l'angle aigu du bord latéral de la paroi (33) transversale, et **en ce que** ladite partie avant comprend des bandes (34, 35) de recouvrement délimitées par la superposition des parois (32, 33) transversale et interne l'une sur l'autre, les parois (31, 32, 33) constituant ledit passage de roue sont fixées les unes aux autres par soudure réalisées le long de chacune des bandes (34, 35) de recouvrement.

2. Partie (1) selon la revendication 1, **caractérisée en ce que** chacune des parois (32, 33) définissant ladite poutre (5) de rigidification est fixée au support (2) de suspension et au brancard (4) de sorte que l'effort d'un choc frontal transitant par le brancard (4) est transmis au support (2) de suspension.

3. Partie (1) selon la revendication 1 ou 2, **caractérisée en ce que** le corps creux formant ladite poutre (5) de rigidification s'étend sur toute la hauteur du passage (3) de roue.

4. Partie (1) selon la revendication 2 à 3, **caractérisé en ce que** le corps creux de la poutre (5) est rempli d'un moyen d'augmentation de la rigidité des parois la délimitant.

5. Véhicule, telle qu'une automobile, comportant une structure, **caractérisé en ce que** la partie (1) avant de la structure est conforme à l'une quelconque des revendications 1 à 4.

## Patentansprüche

1. Vorderteil (1) einer Fahrzeugstruktur, insbesondere eines Kraftfahrzeugs, der einen Längsträger (4), einen Aufhängungsträger (2) und einen Radlauf (3), der vertikal zwischen dem Längsträger und dem Aufhängungsträger angeordnet ist, umfasst, wobei der Radlauf (3) mindestens zwei Wände (32, 33) umfasst, die übereinander gelagert sind und die Wände eines Hohlkörpers abgrenzen, der einen Balken (5) zum Versteifen mit dreieckigem Querschnitt bildet, wobei der Versteifungsbalken (5) den Aufhängungsträger (2) mit dem Längsträger (4) verbindet, wobei eine der Wände des Radlaufs (3) eine Querwand (33) ist, die einen Seitenrand umfasst, der mit einem spitzen Winkel umgefaltet ist, **dadurch gekennzeichnet, dass** der andere der Teil des Radlaufs eine Innenwand (32) bildet, die einen vorderen umgefalteten Rand umfasst, der eine schräge Wand (36) umfasst, die einen Verbindungswinkel bildet und sich im Inneren des spitzen Winkels des seitlichen Rands der Querwand (33) erstreckt, und dass der Vorderteil Abdeckbänder (34, 35) umfasst, die durch das Übereinanderlagern der der Querwände (32, 33) und innen einer auf der anderen abgegrenzt sind, wobei die Wände (31, 32, 33), die den Radlauf bilden, aneinander durch Schweißung befestigt sind, die entlang jedes der Abdeckbänder (34, 35) ausgeführt ist.

2. Teil (1) nach Anspruch 1, **dadurch gekennzeichnet, dass** jede der Wände (32, 33), die den Versteifungsbalken (5) definiert, an dem Aufhängungsträger (2) und an dem Längsträger (4) derart befestigt ist, dass die Kraft eines Frontalaufpralls, die durch den Längsträger (4) durchgeht, an den Aufhängungsträger (2) übertragen wird.

3. Teil (1) nach Anspruch 1 oder 2, **dadurch gekennzeichnet, dass** sich der Hohlkörper, der den Versteifungsbalken (5) bildet, auf der gesamten Höhe des Radlaufs (3) erstreckt.

4. Teil (1) nach Anspruch 2 bis 3, **dadurch gekennzeichnet, dass** der Hohlkörper des Balkens (5) mit einem Mittel zum Erhöhen der Steifigkeit der Wände, die ihn abgrenzen, gefüllt ist.

5. Fahrzeug, wie zum Beispiel ein Kraftfahrzeug, das eine Struktur umfasst, **dadurch gekennzeichnet, dass** der Vorderteil (1) der Struktur einem der Ansprüche 1 bis 4 entspricht.

## Claims

1. A front portion (1) of a vehicle structure, in particular of a motor vehicle, including a side sill (4), a suspension bracket (2) and a wheel housing (3) arranged vertically between the side sill and the suspension bracket, the wheel housing (3) including at least two walls (32, 33) superposed one on the other and delimiting the walls of a hollow body forming a stiffening beam (5) of triangular section, said stiffening beam (5) joining the suspension bracket (2) to the side sill (4), one of the walls of the said wheel housing (3) is a transverse wall (33) including a lateral edge bent at an acute angle, **characterized in that** the other of the parts of the wheel housing defines an internal wall (32) includes a front bent edge including an inclined wall (36) forming a right-angled connector and extending to the interior of the acute angle of the lateral edge of the transverse wall (33), and **in that** said front portion includes covering strips (34, 35) delimited by the superposition of the transverse and internal walls (32, 33) one on the other, the walls (31, 32, 33) constituting the said wheel housing are fixed to one another by welding realized along each of the covering strips (34, 35).

2. The portion (1) according to Claim 1, **characterized in that** each of the walls (32, 33) defining the said stiffening beam (5) is fixed to the suspension bracket (2) and to the side sill (4) such that the force of a frontal impact passing through the side sill (4) is transmitted to the suspension bracket (2).

3. The portion (1) according to Claim 1 or 2, **characterized in that** the hollow body forming the said stiffening beam (5) extends over the entire height of the wheel housing (3).

4. The portion (1) according to Claim 2 to 3, **characterized in that** the hollow body of the beam (5) is filled with a means for increasing the rigidity of the walls delimiting it.

5. A vehicle, such as a motor vehicle, comprising a structure, **characterized in that** the front portion (1) of the structure is in accordance with any one of Claims 1 to 4.
